# EUROPEAN PATENT SPECIFICATION

(11) **EP 0 745 567 B1**
(45) Date of publication and mention of the grant of the patent: **07.04.1999**
(21) Application number: 96107845.8
(22) Date of filing: 17.05.1996
(51) Int. Cl.: C03C 17/00, C03C 17/30, C09K 3/18

(54) **Water repellent surface treatment with integrated primer**
Wasserabweisende Oberflächenbehandlung mit integriertem Grundiermittel
Traitement de surface hydrofuge avec un revêtement primaire intégré

(30) Priority: 01.06.1995 US 458149; 05.06.1995 US 461464
(43) Date of publication of application: 04.12.1996
(73) Proprietor: PPG INDUSTRIES, INC., Pittsburgh Pennsylvania 15272 (US)
(72) Inventor: Goodwin, George B., Cranberry Township, PA 16066 (US)
(74) Representative: Sternagel, Hans-Günther, Dr.

(56) References cited:
- EP-A- 0 513 727
- EP-A- 0 548 775
- EP-A- 0 719 743
- DE-A- 4 218 657
- US-A- 4 983 459

## Description

The present invention relates generally to the art of surface treatment and, more particularly, to the art of producing a water repellent surface on various substrates, and most particularly to improving the durability of such water repellent surfaces.

### Relevant Art

US-A-5,314,731 to Yoneda et al. describes a surface-treated substrate having at least two treated surface layers wherein the first outermost layer is obtained by treatment with a compound containing at least one Si-NCO group capable of forming a surface having a contact angle of at least 70° against water and the second underlayer is obtained by treatment with at least one reactive silane compound selected from isocyanate silane compounds and hydrolyzable silane compounds.

US-A-4,983,459 and 4,997,684 to Franz et al. disclose an article and method respectively for providing a durable nonwetting surface on glass by treatment with a perfluoroalkylalkyl silane and a fluorinated olefin telomer.

In US-A-5,308,705 Franz et al. describe providing nonwetting surface properties to substrates other than glass by treatment with a perfluoroalkylalkyl silane and a fluorinated olefin telomer.

In US-A-5,328,768 Goodwin discloses a glass substrate the surface of which is treated with first a silica primer layer and second a perfluoroalkylalkyl silane.

EP-A-719 743 which is a document to be considered under Art. 54(3) EPC discloses a coating composition for producing a water repellent surface on a substrate comprising an aprotic solvent, a perfluoroalkylalkylsilane and a hydrolyzable silane compound.

EP-A-548 775 discloses providing a water repellent and abrasion resistant coating on a surface of a glass substrate by application of a mixed solution containing a fluoroalkylsilane and an alkoxysilane and 100 mol% to 1000 mol% of the total amounts of the fluoroalkylsilane and alkoxysilane water to partially hydrolyze the silane compounds.

EP-A-513 727 refers to a water repellent glass by applying a coating composition onto the glass substrate which comprises a first silicone alkoxide of the formula Si(OR)₄ and a second silicone alkoxide having a part of the alkoxy groups substituted with a fluoroalkyl group.

DE-A-42 18 657 also discloses a considerable amount of water which is added to the organic solvent to promote hydrolysis and polycondensation of the fluoroalkyl silane and the metal oxide precursor which is a silicone alkoxide.

It is the object of the invention to provide a coating composition which is capable of making a surface of a substrate nonwetting and highly water repellent.

The object is attained by a composition for producing a water repellent surface on a substrate comprising a mixture of an aprotic solvent, and a perfluoroalkylalkylsilane selected from compounds having the general formula RₘR'ₙSiX₄₋ₘ₋ₙ, wherein R is a perfluoroalkylalkyl radical, R' is a vinyl or an alkyl radical, m is 1, 2, or 3, n is 0, 1, or 2, and m+n is less than 4, and X is selected from the group consisting of halogen, alkoxy and acyloxy radicals, and completely hydrolyzable siloxane(s) capable of hydrolysis to a silica gel.

Preferred embodiments of the composition are defined in dependent claims 2-11.

The invention also relates to use of said composition by applying it to a surface of a substrate resulting in a surface with high water repellency and high lubricity.

The durability of the water and dirt repellency of a substrate surface is improved by applying to the substrate surface a perfluoroalkylalkylsilane compound and a completely hydrolyzable siloxane compound. The hydrolyzable siloxane compound is a compound capable of hydrolytic condensation to form silica gel and functions as an integral primer compound. The surface treatment of the present invention provides enhanced durability to the water and dirt repellent surface without requiring a separate primer layer. High water repellency and lubricity are provided by perfluoroalkylalkylsilane. The hydrolyzable siloxane also provides for reactive drying of the solvent. The perfluoroalkylalkylsilane and hydrolyzable siloxane surface treatment of the present invention also provides enhanced abrasion resistance to the substrate surface. Increased resistance to humidity, ultraviolet radiation and mechanical abrasion are provided by the siloxane compound capable of hydrolytic condensation to silica gel.

### DESCRIPTION OF THE PREFERRED EMBODIMENT

Durability of rain and soil repellency provided by application of a perfluoroalkylalkylsilane to a substrate surface is enhanced by mixing a siloxane or mixture of siloxane compounds capable of hydrolysis to silica gel with a perfluoroalkylalkylsilane prior to application. In accordance with the present invention, a mixture of a perfluoroalkylalkylsilane and siloxane or mixture of siloxane compounds capable of hydrolysis to silica gel is applied to the surface of glass to form a coating which is more durable than would have been formed without the siloxane or mixture of siloxane compounds capable of hydrolysis to silica gel.

Perfluoroalkylalkylsilane and hydrolyzable siloxane are applied to the surface of a substrate to produce the article of the present invention in an aprotic solvent, preferably an alkane or mixture of alkanes, or a fluorinated solvent. The preferred solution of the present invention is applied to a substrate surface by any conventional technique such as dipping, flowing, wiping or spraying. The silane reacts with the substrate surface, and excess solution is removed, providing a durable, non-wetting, lubricating surface with improved abrasion resistance. The present invention provides the durability benefits of a primer without the additional step of applying a separate primer layer. The use of the completely hydrolyzable siloxane improves the humidity, ultraviolet light, and abrasion resistance of the silane surface treatment as measured by the Cleveland Condensing Cabinet, QUV (with FS40 or B313 lamps), and wet sled abrasion tests, indicating a longer useful product lifetime.

Suitable siloxanes have the general formula Si_{y}O_{z}X_{4y-2z}, wherein X is selected from the group of halogen, alkoxy and acyloxy radicals, y is two or more, and z is one or more, and 4y-2z is greater than zero. Preferred hydrolyzable siloxanes include hexachlorodisiloxane, octachlorotrisiloxane, and higher oligomer chlorosiloxanes.

The completely hydrolyzable siloxanes serve two functions. One is to become part of the coating and impart resistance to weathering and abrasion. Another function is to dry the solvent. Typical hydrocarbon solvents can contain 50 to 200 ppm of water. Other solvents can be much higher in water content. For example, a solvent containing 200 ppm water would have enough water present to partially hydrolyze the perfluoroalkylalkylsilane at 0.5 weight percent concentration. The completely hydrolyzable siloxane is capable of eliminating or reducing the water content of the solvent prior to perfluoroalkylalkylsilane addition. Otherwise, partially hydrolyzed perfluoroalkylalkylsilane could result in insufficient coating deposition or very poor durability.

Preferred perfluoroalkylalkylsilanes have the general formula RₘR'ₙSiX₄₋ₘ₋ₙ, wherein R is a perfluoroalkylalkyl radical; m is typically one, n is typically zero or one, and m+n is less than 4; R' is a vinyl or an alkyl radical, preferably methyl, ethyl, vinyl or propyl; and X is preferably a radical such as halogen, acyloxy, and/or alkoxy. Preferred perfluoroalkyl moieties in the perfluoroalkylalkyl radicals range from CF₃ to C₃₀F₆₁, preferably C₆F₁₃ to C₁₈F₃₇, and most preferably C₈F₁₇ to C₁₂F₂₅; the alkyl moiety is preferably ethyl. R' is preferably methyl or ethyl. Preferred radicals for X include hydrolyzable chloro, bromo, iodo, methoxy, ethoxy and acetoxy radicals. Preferred perfluoroalkylalkylsilanes in accordance with the present invention include perfluoroalkylethyltrichlorosilane, perfluoroalkylethyltrimethoxysilane, perfluoroalkylethyltriacetoxysilane, perfluoroalkylethyldichloro(methyl)silane and perfluoroalkylethyldiethoxy(methyl)silane.

These preferred perfluoroalkylethylsilanes appear to react with bonding sites at the substrate surface on a molecular basis. Strong surface bonding of the perfluoroalkylethylsilanes produces a durable substrate surface which exhibits a high contact angle with a drop of water, indicating high water repellency.

Suitable aprotic solvents include hexane, heptane, mineral spirits, acetone, toluene and naphtha. Preferred solvents are alkanes or halogenated hydrocarbon solvents such as trichlorotrifluoroethane, and methylene chloride, and perfluorinated organic compounds such as perfluorocarbons. Concentrations of 0.005 to 50, preferably 0.05 to 5, percent of silane are preferred. The solvent may be evaporated simply by drying in air at ambient temperature, or excess solution preferably may be removed by wiping.

The silanes may also be crosslinked to form a more durable coating. Preferably, curing is accomplished by heating the silane treated surface. Typically, curing temperatures of at least 66°C (150°F) are preferred, particularly above 93°C (200°F). A cure cycle of about 93°C (200°F) for about 30 minutes is suitable. Higher temperatures and shorter heating times may be more efficient. A cure cycle of 2 to 5 minutes at about 204 to 260°C (400 to 500°F) may be preferred, particularly about 3 minutes at about 243°C (470°F). A fluorinated olefin telomer may also be included in the silane composition as described in US-A-5,308,705, preferably of the general formula CₘF₂ₘ₊₁CH=CH₂, where m is from 1 to 30, preferably 1 to 16, more preferably 4 to 10. The substrate surfaces may, in the alternative, be contacted with perfluoroalkylalkylsilane in vapor form.

The contact angles recited herein are measured by the sessile drop method using a modified captive bubble indicator manufactured by Lord Manufacturing, Inc., equipped with Gaertner Scientific goniometer optics. The surface to be measured is placed in a horizontal position, facing upward, in front of a light source. A drop of water is placed on top of the surface in front of the light source so that the profile of the sessile drop can be viewed and the contact angle measured through the goniometer telescope equipped with circular protractor graduation.

Weathering chambers include the Cleveland Condensing Cabinet (CCC) and QUV Tester (products of The Q-Panel Company, Cleveland, OH). The CCC chamber was operated at a vapor temperature of 60°C (140°F) in an indoor ambient environment which resulted in constant water condensation on the test surface. The QUV Tester is operated with cycles of 8 hours UV (either B313 or FS40 lamps) at black panel temperature of 65-70°C and 4 hours condensing humidity at 50°C.

## Claims

1. A composition for producing a water repellent surface on a substrate comprising a mixture of an aprotic solvent, and a perfluoroalkylalkylsilane selected from compounds having the general formula RₘR'ₙSiX₄₋ₘ₋ₙ, wherein R is a perfluoroalkylalkyl radical, R' is a vinyl or an alkyl radical, m is 1, 2, or 3, n is 0, 1, or 2, and m+n is less than 4, and X is selected from the group consisting of halogen, alkoxy and acyloxy radicals, and completely hydrolyzable siloxane(s) capable of hydrolysis to a silica gel.

2. The composition according to claim 1, wherein said siloxane has the general formula Si_{y}O_{z}X_{4y-2z} wherein X is selected from the group of halogen, alkoxy and acyloxy radicals, y is two or more and z is one or more and 4y-2z is greater than zero.

3. The composition according to claim 1 or 2 which further comprises fully hydrolyzable silane(s) capable of hydrolysis to a silica gel.

4. The composition according to claim 3, wherein said completely hydrolyzable silane is selected from the group consisting of silanes having the general formula SiX₄, wherein X is selected from the group consisting of halogen, alkoxy and acyloxy radicals.

5. The composition according to claim 4, wherein said completely hydrolyzable silane is silicon tetrachloride.

6. The composition according to any of the preceding claims, which further comprises a fluorinated olefin telomer having the general formula CₘF₂ₘ₊₁CH=H₂ where m is from 1 to 30.

7. The composition of any of the preceding claims, wherein the aprotic solvent is selected from alkanes, mineral spirits, acetone, toluene, naphtha, halogenated hydrocarbons, perfluorinated organic solvents or mixtures thereof.

8. The composition according to claim 1, wherein the perfluoroalkyl moiety of said perfluoroalkylalkyl radical is selected from CF₃ to C₃₀F₆₁.

9. The composition according to claim 1, wherein R' is selected from the group consisting of methyl, ethyl, vinyl and propyl

10. The composition according to claim 1, wherein X is selected from the group consisting of chloro, bromo, iodo, methoxy, ethoxy and acetoxy.

11. The composition according to claim 1, wherein said perfluoroalkylalkylsilane is selected from the group consisting of perfluoroalkylethyltrichlorosilane, perfluoroalkylethyltrimethoxysilane, perfluoroalkylethyltriacetoxysilane, perfluoroalkylethyldichloro(methyl)silane and perfluoroalkylethyldiethoxy(methyl)silane.

12. Use of the composition according to any of claims 1 to 11 for applying a water repellent coating onto a surface of a substrate.

13. The use of claim 12, wherein said composition is applied and rubbed on the surface against the surface of the substrate to achieve a contact angle of at least 100° within one hour of the practice of the rubbing step and thereafter the excess composition is removed from the surface of said substrate.

## Patentansprüche

1. Zusammensetzung zum Erzeugen einer wasserabweisenden Oberfläche auf einem Träger, enthaltend eine Mischung eines aprotischen Lösemittels und eines Perfluoralkylalkylsilans, ausgewählt aus Verbindungen der allgemeinen Formel RₘR'ₙSiX₄₋ₘ₋ₙ, in der R eine Perfluoralkylalkylgruppe ist, R' ist eine Vinylgruppe oder eine Alkylgruppe, m ist 1, 2 oder 3, n ist 0, 1 oder 2 und m+n ist kleiner 4, und X ist ausgewählt aus der Gruppe bestehend aus Halogen, Alkoxy- und Acyloxygruppen und vollständig hydrolysierbaren Siloxan(en), die zu Kieselsäuregel hydrolysieren können.

2. Zusammensetzung nach Anspruch 1, dadurch gekennzeichnet, daß das Siloxan der allgemeinen Formel Si_{y}O_{z}X_{4y-2z} genügt, in der X ausgewählt ist aus der Gruppe aus Halogen, Alkoxy- und Acyloxygruppen, y ist 2 oder mehr und z ist 1 oder mehr und 4y-2z ist größer null.

3. Zusammensetzung nach Anspruch 1 oder 2, dadurch gekennzeichnet, daß sie weiterhin vollständig hydrolysierbare(s) Silan(e), die zu Kieselsäuregel hydrolysieren können, enthält.

4. Zusammensetzung nach Anspruch 3, dadurch gekennzeichnet, daß das vollständig hydrolysierbare Silan ausgewählt ist aus der Gruppe bestehend aus Silanen der allgemeinen Formel SiX₄, in der X ausgewählt aus der Gruppe bestehend aus Halogen, Alkoxy- und Acyloxygruppen.

5. Zusammensetzung nach Anspruch 4, dadurch gekennzeichnet, daß das vollständig hydrolysierbare Silan Siliciumtetrachlorid ist.

6. Zusammensetzung nach einem der vorstehenden Ansprüche, dadurch gekennzeichnet, daß sie weiterhin ein fluoriertes Olefintelomer der allgemeinen Formel CₘF₂ₘ₊₁CH=CH₂ enthält, in der m von 1 bis 30 ist.

7. Zusammensetzung nach einem der vorstehenden Ansprüche, dadurch gekennzeichnet, daß das aprotische Lösemittel ausgewählt ist aus Alkanen, Lösungsbenzin, Aceton, Toluol, Petrolether, halogenhaltigen Kohlenwasserstoffen, perfluorierten organischen Lösemitteln oder Mischungen derselben.

8. Zusammensetzung nach Anspruch 1, dadurch gekennzeichnet, daß die Perfluoralkylgruppe der Perfluoralkylalkylgruppe ausgewählt ist aus CF₃ bis C₃₀F₆₁.

9. Zusammensetzung nach Anspruch 1, dadurch gekennzeichnet daß R' ausgewählt ist aus der Gruppe bestehend aus Methyl, Ethyl, Vinyl und Propyl.

10. Zusammensetzung nach Anspruch 1, dadurch gekennzeichnet, daß X ausgewählt ist aus der Gruppe bestehend aus Chlor, Brom, Iod, Methoxy, Ethoxy und Acetoxy.

11. Zusammensetzung nach Anspruch 1, dadurch gekennzeichnet, daß das Perfluoralkylalkylsilan ausgewählt ist aus der Gruppe bestehend aus Perfluoralkylethyltrichlorsilan, Perfluoralkylethyltrimethoxysilan, Perfluoralkylethyltriacetoxysilan, Perfluoralkylethyldichlor(methyl)silan und Perfluoralkylethyldiethoxy(methyl)silan.

12. Verwendung der Zusammensetzung nach einem der Ansprüche 1 bis 11 zum Aufbringen einer wasserabweisenden Beschichtung auf eine Oberfläche eines Trägers.

13. Verwendung nach Anspruch 12, dadurch gekennzeichnet, daß die Zusammensetzung aufgebracht und auf dieser in die Oberfläche eingerieben wird, um einen Kontaktwinkel von mindestens 100° innerhalb einer Stunde nach Durchführung des Einreibschrittes zu erreichen, und anschließend überschüssige Zusammensetzung von der Oberfläche des Trägers entfernt wird.

## Revendications

1. Composition de production d'une surface qui repousse l'eau sur un support, comprenant un mélange d'un solvant aprotique et d'un perfluoralkylalkylsilane choisi parmi des composés répondant à la formule générale RₘR'ₙSiX₄₋ₘ₋ₙ, dans laquelle R représente un radical perfluoralkylalkyle, R' représente un radical vinyle ou un radical alkyle, m est égal à 1, 2, ou 3, n est égal à zéro, 1,ou 2 et m+n est inférieur à 4, et X est choisi dans le groupe formé par les atomes d'halogènes, les radicaux alcoxy et acyloxy et un ou plusieurs siloxanes complètement hydrolysables, pouvant s'hydrolyser en un gel de silice.

2. Composition suivant la revendication 1, caractérisée en ce que ledit siloxane possède la formule générale Si_{y}O_{z}X_{4y-2z}, dans laquelle X est choisi dans le groupe formé par les atomes d'halogènes, les radicaux alcoxy et acyloxy, y est égal à deux ou plus de deux et z est égal à 1 ou à plus d'un et 4y-2z est supérieur à zéro.

3. Composition suivant la revendication I ou 2, caractérisée en ce qu'elle comprend en outre un ou plusieurs silanes totalement hydrolysables capables de s'hydrolyser en un gel de silice.

4. Composition suivant la revendication 3, caractérisée en ce que ledit silane totalement hydrolysable est choisi dans le groupe formé par les silanes qui répondent à la formule SiX₄, dans laquelle X est choisi dans le groupe formé par les atomes d'halogènes, les radicaux alcoxy et acyloxy.

5. Composition suivant la revendication 4, caractérisée en ce que ledit silane complètement hydrolysable est le tétrachlorure de silicium.

6. Composition suivant l'une quelconque des revendications précédentes, caractérisée en ce qu'elle comprend en outre un télomère d'oléfine fluorée répondant à la formule générale CₘF₂ₘ₊₁ CH=CH₂, dans laquelle m varie de 1 à 30.

7. Composition suivant l'une quelconque des revendications précédentes, caractérisée en ce que l'on choisit le solvant aprotique parmi les alcanes, les essences minérales, l'acétone, le toluène, le naphta, les hydrocarbures halogénés, des solvants organiques perfluorés, ou leurs mélanges.

8. Composition suivant la revendication 1, caractérisée en ce que le groupement perfluoralkylalkyle dudit radical perfluoralkylalkyle est choisi parmi les composés qui répondent aux formules CF₃ à C₃₀F₆₁.

9. Composition suivant la revendication 1, caractérisée en ce que R' est choisi dans le groupe formé par les radicaux méthyle, éthyle, vinyle et propyle.

10. Composition suivant la revendication 1, caractérisée en ce que X est choisi dans le groupe formé par le chlore, le brome, l'iode, les radicaux méthoxy, éthoxy et acétoxy.

11. Composition suivant la revendication 1, caractérisée en ce que ledit perfluoralkylalkylsilane est choisi dans le groupe formé par les composés qui suivent : perfluoralkyléthyltrichlorosilane, perfluoralkyléthyltriméthoxysilane, perfluoralkyléthyltriacétoxysilane, perlfuoralkyéthyldichloro(méthyl)silane et perfluoralkyléthyldiéthoxy(méthyl)silane.

12. Utilisation de la composition suivant l'une quelconque des revendications 1 à 11, en vue de l'application d'un revêtement repoussant l'eau sur une surface d'un support.

13. Utilisation suivant la revendication 12, caractérisée en ce que l'on applique ladite composition et on la frotte sur la surface contre la surface du support pour obtenir un angle de contact d'au moins 100° en l'espace d'une heure de la pratique de l'étape de frottement et on enlève ensuite l'excès de composition de la surface dudit support.
